# FASCICULE DE BREVET EUROPEEN

(11) **EP 3 105 027 B1**
(45) Date de publication et mention de la délivrance du brevet: **09.01.2019**
(21) Numéro de dépôt: 15709244.6
(22) Date de dépôt: 11.02.2015
(51) Int. Cl.: B29B 15/12, B29C 70/38, B29C 70/50, B29K 101/12

(54) **PROCÉDÉ DE PRÉPARATION D'UN MATÉRIAU FIBREUX PRÉ-IMPREGNÉ PAR POLYMÈRE THERMOPLASTIQUE A L'AIDE D'UN GAZ SUPERCRITIQUE**
VERFAHREN ZUR HERSTELLUNG EINES FASERMATERIALS, DAS MITHILFE EINES SUPERKRITISCHEN GASES MIT EINEM THERMOPLASTISCHEN POLYMER VORIMPRÄGNIERT IST
PROCESS FOR PREPARING A FIBROUS MATERIAL PRE-IMPREGNATED WITH THERMOPLASTIC POLYMER WITH THE AID OF A SUPERCRITICAL GAS

(30) Priorité: 13.02.2014 FR 1451140
(43) Date de publication de la demande: 21.12.2016
(73) Titulaire: Arkema France, 92700 Colombes (FR)
(72) Inventeur: GAILLARD, Patrice, 64370 Hagetaubin (FR); HOCHSTETTER, Gilles, 94240 L'Hay les Roses (FR); SAVART, Thibault, 64230 Sauvagnon (FR)
(74) Mandataire: A.P.I. Conseil
(86) Numéro de dépôt international: PCT/FR2015/050334
(87) Numéro de publication internationale: WO 2015/121586

(56) Documents cités:
- EP-A1- 2 664 643
- MILLER A ET AL: "IMPREGNATION TECHNIQUES FOR THERMOPLASTIC MATRIX COMPOSITES", POLYMERS AND POLYMER COMPOSITES, RAPRA TECHNOLOGY, vol. 4, no. 7, 1 janvier 1996 (1996-01-01) , pages 459-481, XP000658227, ISSN: 0967-3911
- IRENEO KIKIC ET AL: "Supercritical impregnation of polymers", CURRENT OPINION IN SOLID STATE AND MATERIALS SCIENCE, vol. 7, no. 4-5, 1 août 2003 (2003-08-01), pages 399-405, XP055131937, ISSN: 1359-0286, DOI: 10.1016/j.cossms.2003.09.001

## Description

### [Domaine de l'invention]

La présente invention concerne un procédé de préparation d'un matériau fibreux pré-imprégné, en particulier sous forme de ruban, comprenant un renfort fibreux et une matrice de polymère thermoplastique.

L'invention concerne aussi l'utilisation du procédé pour la fabrication de rubans calibrés convenables à la fabrication de pièces composites en trois dimensions (3D) par dépose automatique par robot desdits rubans.

La fabrication de matériaux fibreux pré-imprégnés par un polymère thermoplastique ou un mélange de polymères thermoplastiques en voie fondue, désigné également par résine thermoplastique, permet une mise en forme de ces matériaux fibreux pré-imprégnés sous forme de bandes, calibrées utilisables pour fabriquer des matériaux composites. Les matériaux fibreux pré-imprégnés sont utilisés dans la fabrication de pièces de structure en vue de les alléger tout en maintenant une résistance mécanique comparable à celle obtenue pour des pièces de structure métalliques et/ou en assurant l'évacuation de charges électrostatiques et/ou en assurant une protection thermique et/ou chimique.

Dans la présente description, on utilise le terme « bande » pour désigner des bandes de matériau fibreux dont la largeur est supérieure ou égale à 1 00mm. On utilise le terme « ruban » pour désigner des rubans de largeur calibrée et inférieure ou égale à 100mm.

De tels matériaux fibreux pré-imprégnés sont notamment destinés à la réalisation de matériaux composites légers pour la fabrication de pièces mécaniques ayant une structure à trois dimensions et possédant des propriétés de bonne résistance mécanique, thermique et capables d'évacuer des charges électrostatiques, c'est-à-dire des propriétés compatibles avec la fabrication de pièces notamment dans les domaines de la mécanique, de l'aéronautique et nautique, de l'automobile, de l'énergie, de la construction (bâtiments), de la santé et du médical, de l'armée et de l'armement, des sports et loisirs, et de l'électronique. Ainsi, les matériaux composites sont utilisés pour la réalisation de pièces en trois dimensions (3D), la réalisation de ces matériaux composites pouvant se faire par un procédé connu de dépose de bandes assistée par un robot (procédé AFP (de l'acronyme anglais « Automatic Fiber Placement » par exemple).

Les matériaux composites obtenus comprennent le matériau fibreux, constitué des fibres de renfort, et une matrice constituée par le polymère d'imprégnation. Le premier rôle de cette matrice est de maintenir les fibres de renfort dans une forme compacte et de donner la forme voulue au produit final. Une telle matrice sert entre autres à protéger les fibres de renfort contre l'abrasion et un environnement agressif, à contrôler l'aspect de surface et à disperser d'éventuelles charges entre les fibres. Le rôle de cette matrice est important pour la tenue à long terme du matériau composite, notamment en ce qui concerne la fatigue et le fluage

Dans la présente invention, on entend par « matériau fibreux » un assemblage de fibres de renfort. Avant sa mise en forme, il se présente sous forme de mèches. Après sa mise en forme, il se présente sous forme de bandes ou de nappes, ou de tresses, ou de morceaux. Lorsque les fibres de renfort sont continues, leur assemblage constitue un tissu. Lorsque les fibres sont courtes, leur assemblage constitue un feutre ou un non tissé.

Les fibres pouvant entrer dans la composition du matériau fibreux sont plus spécialement des fibres de carbone, des fibres de verre, des fibres de basalte, des fibres de carbure de silicium (SIC), des fibres à base de polymères, des fibres végétales, ou des fibres cellulosiques utilisées seules ou en mélange.

Une bonne qualité des pièces composites tridimensionnelles fabriquées à partir de matériaux fibreux pré-imprégnés passe par une maîtrise d'une part du procédé d'imprégnation des fibres de renfort par le polymère thermoplastique et d'autre part du procédé de mise en forme du matériau fibreux pré-imprégné sous forme de produit semi-fini.

Jusqu'à présent, la fabrication de bandes de matériaux fibreux pré-imprégnés renforcées par imprégnation de polymère thermoplastique pouvait être réalisée au moyen de plusieurs procédés choisis notamment suivant la nature du polymère, du type de matériau composite final souhaité et de son domaine d'application. Les technologies de dépose de poudre ou d'extrusion de polymère fondu sont utilisées pour imprégner des polymères thermodurcissables comme les résines époxy par exemple tel que décrit dans le brevet WO2012/066241A2. Ces technologies ne sont généralement pas applicables directement à l'imprégnation de polymères thermoplastiques, en particulier ceux à haute température de fusion qui ont une viscosité à l'état fondu trop importante pour obtenir des produits de bonne qualité.

Des sociétés commercialisent des bandes de matériaux fibreux obtenues par une méthode d'imprégnation de fibres unidirectionnelles par passage des fibres, en continu, dans un bain fondu de polymère thermoplastique contenant un solvant organique tel que la benzophénone. On peut par exemple se référer au document US 4 541 884 de l'Imperial Chemical Industries. La présence du solvant organique permet notamment d'adapter la viscosité du mélange fondu et d'assurer une bonne enduction des fibres. Les fibres ainsi pré-imprégnées sont ensuite mises en forme. Elles peuvent par exemple être découpées en bandes de différentes largeurs puis disposées sous une presse, puis chauffées à une température supérieure à la température de fusion du polymère pour assurer la cohésion du matériau et notamment l'adhérence du polymère sur les fibres. Cette méthode d'imprégnation et de mise en forme permet de réaliser des pièces de structure à haute tenue mécanique.

Un des inconvénients de cette technique réside dans la température de chauffe nécessaire à l'obtention de ces matériaux. La température de fusion des polymères dépend notamment de leur nature chimique. Elle peut être relativement élevée pour des polymères de type poly(méthacrylate de méthyle) (PMMA), voire très élevée pour des polymères de type poly(sulfure de phénylène) (PPS), poly(éther éther cétone) (PEEK) ou poly(éther cétone cétone) (PEKK) par exemple. La température de chauffe peut donc monter à des températures supérieures à 250°C, et même supérieures à 350°C, températures qui sont très supérieures à la température d'ébullition et au point éclair du solvant, qui sont respectivement de 305°C et 150°C pour la benzophénone. Dans ce cas, on assiste à un départ brusque du solvant induisant une forte porosité au sein des fibres et provoquant par conséquent l'apparition de défauts dans le matériau composite. Le procédé est donc difficilement reproductible et implique des risques d'explosion mettant en danger les opérateurs. Enfin, l'utilisation de solvants organiques est à éviter pour des raisons environnementales et d'hygiène et sécurité des opérateurs.

On peut se reporter à l'état de la technique le plus proche constitué par le document WO2008/061170 (D1) de Honeywell International Inc. Ce document décrit un procédé de réalisation d'une structure de fibres orientées de façon unidirectionnelle.. L'utilisation de fibres de même nature ou d'un assemblage de fibres est envisagé (page 12, lignes 25 à 29). Cependant, ce procédé consiste à agencer les fibres unidirectionnellement et à les enrober ou les imprégner par passage dans un bain contenant un liquide visqueux. Ce liquide visqueux peut être composé par exemple d'une résine thermoplastique dont la viscosité est le paramètre le plus important (page 14, lignes 6 à 9). Après trempage, se succèdent trois étapes : un étalement, une uniformisation et un séchage du dépôt afin d'obtenir le produit final. Les fibres de l'agencement sont ainsi collées les unes aux autres et forment la structure désirée. Pour obtenir une viscosité désirée, des solvants sont utilisés si besoin. Les inconvénients de cette technique sont similaires aux inconvénients décrits à propos de la technique précédente à savoir l'utilisation de solvant pour réduire la viscosité conduisant pendant la fusion du polymère lorsque la température est élevée, à un départ brusque dudit solvant qui induit une forte porosité au sein des fibres et qui provoque ainsi l'apparition de défauts dans le matériau composite. De plus, l'utilisation de solvants organiques est à éviter pour des raisons environnementales et d'hygiène et sécurité des opérateurs.

Concernant la mise en forme des matériaux fibreux pré-imprégnés sous forme de rubans calibrés, adaptés à la fabrication de pièces composites tridimensionnelles par dépose automatique au moyen d'un robot, celle-ci est en général réalisée en post-traitement.

La qualité des rubans de matériau fibreux pré-imprégné, et donc la qualité du matériau composite final, dépend non seulement de l'homogénéité de l'imprégnation des fibres, mais également de la dimension et plus particulièrement de la largeur et de l'épaisseur des rubans. Une régularité et un contrôle de ces deux paramètres dimensionnels permettent en effet d'améliorer la tenue mécanique des matériaux.

Actuellement, quel que soit le procédé utilisé pour l'obtention des rubans de matériaux fibreux, la fabrication de rubans de faible largeur, c'est-à-dire de largeur inférieure à 100mm, nécessite généralement une refente (c'est-à-dire une découpe) de bandes de largeur supérieure à 500 mm, encore dénommées nappes. Les rubans ainsi dimensionnés sont ensuite repris pour être déposés par un robot à l'aide d'une tête.

En outre, les rouleaux de nappes ne dépassant pas une longueur de l'ordre de 1 km, les rubans obtenus après découpe ne sont en général pas suffisamment longs pour fabriquer certains matériaux de taille importante lors de la dépose par robot. Les rubans doivent donc être raboutés pour obtenir une longueur plus importante, créant alors des surépaisseurs. Ces surépaisseurs entrainent l'apparition d'hétérogénéités qui sont préjudiciables à l'obtention de matériaux composites de bonne qualité.

Les techniques actuelles d'imprégnation de matériaux fibreux et de mise en forme de tels matériaux fibreux pré-imprégnés sous forme de rubans calibrés présentent donc plusieurs inconvénients. Il est par exemple difficile de chauffer de manière homogène un mélange fondu de polymères thermoplastiques dans une filière et en sortie de filière, jusqu'au coeur du matériau, ce qui altère la qualité de l'imprégnation. De plus, la différence de température existante entre les fibres et un mélange fondu de polymères au niveau de la filière d'imprégnation altère également la qualité et l'homogénéité de l'imprégnation. L'utilisation de solvants organiques implique généralement l'apparition de défauts dans le matériau ainsi que des risques environnementaux et de sécurité. La mise en forme, par post-traitement à haute température du matériau fibreux pré-imprégné sous forme de rubans, reste difficile car elle ne permet pas toujours une répartition homogène du polymère au sein des fibres ce qui entraine l'obtention d'un matériau de moindre qualité. Le refendage de nappes pour l'obtention de rubans calibrés et le raboutage de ces rubans induit un coût supplémentaire de fabrication. Le refendage génère en outre des problèmes importants de poussières qui polluent les rubans de matériaux fibreux pré-imprégnés utilisés pour la dépose robot et peuvent entrainer des dysfonctionnements des robots et/ou des imperfections sur les composites. Ceci entraine potentiellement des coûts de réparation des robots, un arrêt de la production et la mise au rebut des produits non conformes. Enfin, lors de l'étape de refendage, une quantité non négligeable de fibres est détériorée, induisant une perte de propriétés, et notamment une réduction de la résistance mécanique et de la conductivité, des rubans de matériau fibreux pré-imprégné.

EP 2 664 643 fait partie de l'état de la technique et décrit un procédé de préparation d'un matériau composite, comprenant un renfort fibreux continu (A'), un polymère thermoplastiqque de polysulfure d'arylène (B'), et une résine thermoplastique (C) liée audit matériau composite. En particulier selon ce document, ledit composite est préparé en imprégnant ledit substrat (A') par une dispersion ou une solution d'un prépolymère de polysulfure d'arylène (B) en phase liquide, dans un solvant organique inert vs la polymérisation dudit prépolymère B) (polymérisation en présence de catalyseur D) ou E) qui sont des composés à base de métal de transition spécifique ou à base de fer) ou en alternative dans un solvant minéral (CO2, azote ou eau) pouvant être à l'état supercritique. Déjà le problème technique décrit dans ce document, n'est pas le même que celui du procédé de la présente invention, car selon ce document le polymère (B') utilisé qui est la matrice finale dudit composite n'est pas utilisé comme tel pour l'imprégnation dudit substrat fibreux (A') mais son précurseur prépolymère polysulfure d'arylène (B) en dispersion ou en solution dans ledit solvant. Ainsi la fonction technique dudit solvant est de disperser ou de dissoudre ledit prépolymère polysulfure d'arylène (B) précurseur du polymère (B') et il n'est nullement décrit ni suggéré dans ledit document, que ledit composé solvant est utilisé en tant qu'agent d'aide à la mise en oeuvre par réduction de la viscosité à l'état fondu du polymère final comme dans le procédé de la présente invention. Dans le cas du procédé de la présente invention c'est bien ce polymère final et matrice dudit composite qui est utilisé pour l'imprégnation directe dudit substrat fibreux à l'aide dudit gaz à l'état supercritique. Dans le document cité ledit solvant sert de solvant de polymérisation dudit prépolymère (B) pour la préparation dudit polymère (B') de chaîne plus longue. Dans le cas du procédé de la présente invention le problème se pose pour un polymère thermoplastique de chaîne longue à l'état fondu, et non pas pour un prépolymère précurseur pour lequel ne pose pas le même problème d'imprégnation dudit substrat fibreux. Par conséquent ledit procédé diffère également par le fait que ledit solvant n'est utilisé que comme solvant dudit prépolymère (B) de faible masse et non pas dudit polymère (B') de masse moléculaire plus élevée comme c'est le cas dans le procédé de la présente invention.

On pourra aussi se reporter à l'état de la technique constitué par le document Miller A et al : « Impregnation techniques for thermoplastic matrix composites », POLYMERS AND POLYMER COMPOSITES, RAPRA TECHNOLOGIY, vol.4, no 7, 1janvier 1996 (1996-01-01, pages 459-481, XP000658227,ISSN :0967-3911. Ce document décrit des méthodes d'imprégnation d'un substrat fibreux par une résine thermoplastique, notamment par injection de ladite résine à l'état fondu (pages 461-462) et par dispersion de ladite résine dans un solvant (pages 463-464). Certains inconvénients bien connus inhérents à l'utilisation de tels solvants, et à la présence de solvants résiduels, sont listés page 464, paragraphe 1. Dans tous les cas, ce document ne concerne pas l'imprégnation d'un matériau fibreux par un polymère à l'état fondu contenant lors de ladite imprégnation un gaz neutre à l'état supercritique.

### [Problème technique]

L'invention a donc pour but de remédier à au moins un des inconvénients de l'art antérieur. L'invention vise notamment à proposer un procédé de préparation d'un matériau fibreux pré-imprégné, en particulier sous forme de ruban, comprenant un renfort fibreux et une matrice de polymère thermoplastique dans lequel l'imprégnation est réalisée par voie fondue du polymère sans restriction sur le choix du polymère thermoplastique liée à la température de fusion/viscosité dudit polymère et l'obtention d'un matériau fibreux pré-imprégné présentant une imprégnation homogène des fibres et avec une porosité et des dimensions contrôlées et reproductibles.

### [Brève description de l'inventionl

A cet effet, l'invention a pour objet un procédé de préparation d'un matériau fibreux pré-imprégné, en particulier sous forme de ruban, comprenant un renfort fibreux et une matrice de polymère thermoplastique principalement caractérisé en ce qu'il comprend l'étape suivante :
i) imprégnation dudit matériau fibreux sous forme d'une mèche unique ou de plusieurs mèches parallèles par ledit polymère à l'état fondu ledit polymère à l'état fondu contenant lors de ladite imprégnation un gaz neutre à l'état supercritique, utilisé comme agent d'aide à la mise en oeuvre par réduction de viscosité à l'état fondu, de préférence ledit gaz étant le CO2 supercritique.

Ainsi, en utilisant un agent d'aide à la réduction de viscosité du polymère à l'état fondu, au moyen d'un gaz neutre, qui peut être un mélange de gaz neutres, à l'état supercritique, l'imprégnation par voie fondue d'un matériau fibreux sous forme d'une mèche unique ou de plusieurs mèches parallèles par ledit polymère peut être mise en oeuvre sans restriction sur le choix du polymère thermoplastique et une imprégnation homogène autour des fibres est assurée avec contrôle et reproductibilité de la porosité et en particulier pour des pré-imprégnés « prêts à l'emploi » une réduction significative de la porosité jusqu' à absence de porosités.

En outre le procédé comprend en plus de l'étape i) les étapes supplémentaires suivantes :
ii) mise en forme de ladite mèche ou desdites mèches parallèles dudit matériau fibreux imprégné selon l'étape i), par calandrage par au moins une calandre chauffante, sous forme de ruban unique unidirectionnel ou des rubans multiples parallèles unidirectionnels, avec dans ce dernier cas ladite calandre chauffante comportant des gorges multiples de calandrage, de préférence jusqu'à 200 gorges de calandrage, en conformité avec le nombre desdits rubans et avec une pression et/ou un écartement entre les rouleaux de la dite calandre, régulés par un système asservi.

Ainsi, le procédé permet également d'obtenir un ou plusieurs rubans de grande longueur et de largeur et d'épaisseur calibrées et de mettre en forme des rubans de dimensions calibrées sans avoir recours à une étape de refendage et de raboutage.

Selon d'autres caractéristiques optionnelles du procédé:
- ledit polymère est un polymère thermoplastique ou un mélange de polymères thermoplastiques ;
- ledit polymère thermoplastique ou mélange de polymères thermoplastiques comprend en outre des charges carbonées, en particulier du noir de carbone ou des nanocharges carbonées, choisies de préférence parmi des graphènes et/ou des nanotubes de carbone et/ou des nanofibrilles de carbone ou leurs mélanges ;
- le polymère thermoplastique ou mélange de polymères thermoplastiques comprend en outre des polymères à cristaux liquides ou du poly(butylène téréphtalate) cyclisé, ou des mélanges en contenant, comme additif ;
- ledit polymère, ou mélange de polymères thermoplastiques, est sélectionné parmi des polymères amorphes dont la température de transition vitreuse est telle que Tg≥ 80°C et/ou parmi des polymères semi-cristallins dort la température de fusion Tf est ≥ 150°C ;
- le polymère thermoplastique ou mélange de polymères thermoplastiques est sélectionné parmi les polyaryl éther cétones, en particulier PEEK, ou polyaryl éther cétone cétone, en particulier PEKK ou polyéther-imides(PEI) aromatiques ou polyaryl sulfones, en particulier polyphénylène sulfones (PPS), ou des polyarylsulfures, en particulier polyphénylène sulfures, ou parmi les polyamides (PA) en particulier polyamides aromatiques éventuellement modifiés par des unités urées, ou les polyacrylates en particulier le polyméthacrylate de méthyle (PMMA), ou les polymères fluorés, en particulier le polyfluorure de vinylidène (PVDF) ;
- il comprend en outre une étape iii) de bobinage dudit ruban ou desdits rubans sur une ou plusieurs bobines, le nombre de bobines étant identique au nombre de rubans, une bobine étant affectée à chaque ruban ;
- l'étape d'imprégnation i) est complétée par une étape de recouvrement de ladite mèche unique ou desdites mèches multiples parallèles après imprégnation par le polymère fondu selon l'étape i), par un polymère fondu pouvant être identique ou différent dudit polymère d'imprégnation i), avant ladite étape calandrage ii), de préférence ledit polymère fondu étant identique audit polymère d'imprégnation i), de préférence ledit recouvrement s'effectuant par extrusion en tête d'équerre par rapport à ladite mèche unique ou par rapport auxdites mèches multiples parallèles ;
- ledit matériau fibreux comprend des fibres continues sélectionnées parmi les fibres de carbone, de verre, de carbure de silicium, de basalte, naturelles en particulier de lin ou de chanvre, de sisal, de soie, ou cellulosiques en particulier de viscose, ou des fibres thermoplastiques de Tg supérieure à la Tg dudit polymère ou dudit mélange de polymères lorsque ce-dernier est amorphe ou de Tf supérieure à la Tf dudit polymère ou dudit mélange de polymères lorsque ce-dernier est semi-cristallin, ou un mélange de deux ou de plusieurs desdites fibres, de préférence de fibres de carbone, de verre ou de carbure de silicium ou leur mélange, en particulier des fibres de carbone ;
- selon un exemple de réalisation, le taux en volume dudit polymère ou mélange de polymères par rapport audit matériau fibreux varie de 40 à 250% de préférence de 45 à 125 % et plus préférentiellement de 45 à 80% ;
- selon un autre exemple de réalisation, le taux en volume dudit polymère ou dudit mélange de polymères par rapport audit matériau fibreux varie de 0,2 et 15 %, de préférence entre 0,2 et 10% et plus préférentiellement de 0,2 et 5% ;
- l'étape de calandrage ii) est réalisée au moyen d'une pluralité de calandres chauffantes ;
- avantageusement, ladite (ou lesdites) calandre(s) chauffante(s) de l'étape ii) comprend un système de chauffage intégré par induction ou par microondes et de préférence par microondes, couplé à la présence de charges carbonées dans ledit polymère thermoplastique ou mélange de polymères thermoplastiques;
- avantageusement, chaque calandre chauffante est associée à un dispositif de chauffage rapide ;
- avantageusement, ladite étape d'imprégnation est réalisée en utilisant une technique d'extrusion ;
- ladite technique d'imprégnation est l'extrusion en tête d'équerre par rapport à ladite mèche unique ou par rapport auxdites mèches multiples parallèles ;
- ledit un gaz neutre à l'état supercritique est un gaz neutre supercritique ou un mélange de gaz neutre supercritique ;
- ledit gaz neutre à l'état supercritique est le gaz CO2 supercritique ou un mélange de gaz neutres à l'état supercritique contenant le CO2 et un gaz fluoré ou un mélange à base de CO2 et d'azote ;
- ledit gaz supercritique, de préférence le CO2 supercritique est injecté au niveau de la tête d'extrusion ;
- ledit gaz supercritique, de préférence le CO2 supercritique est mélangé audit polymère fondu d'imprégnation i) dans un mélangeur statique.
- avantageusement, le procédé comprend une étape de chauffage des mèches des fibres, avant l'étape d'imprégnation i). Le moyen de chauffage préféré est un chauffage par micro-ondes.

L'invention a également pour objet, l'utilisation du procédé tel que défini précédemment, pour la fabrication de rubans calibrés convenables à la fabrication de pièces composites en 3D par dépose automatique par robot desdits rubans.

L'invention porte enfin sur une unité de mise en oeuvre du procédé de préparation d'un matériau fibreux pré-imprégné, en particulier sous forme de ruban, tel que défini ci-dessus, ladite unité étant principalement caractérisée en ce qu'elle comprend :
a) un dispositif d'imprégnation en continu d'une mèche ou d'une pluralité de mèches parallèles de matériau fibreux comprenant une filière d'imprégnation alimentée en polymère à l'état fondu contenant le gaz neutre à l'état supercritique,
b) un dispositif de calandrage en continu de ladite mèche ou desdites mèches parallèles, avec mise en forme, sous forme d'un ruban unique ou sous forme de plusieurs rubans parallèles unidirectionnels, comprenant :
   b1) au moins une calandre chauffante, en particulier plusieurs calandres chauffantes en série, ladite calandre portant une gorge de calandrage ou plusieurs gorges de calandrage, et de préférence dans ce dernier cas ayant jusqu'à 200 gorges de calandrage,
   b2) un système asservi de régulation de la pression et/ou de l'écartement entre rouleaux de calandrage.

Avantageusement, l'unité de mise en oeuvre du procédé, comprend un dispositif de chauffage disposé avant le dispositif d'imprégnation, ledit dispositif de chauffage étant choisi parmi les dispositifs suivants : un dispositif microondes ou d'induction, un dispositif infrarouge IR ou laser ou un autre dispositif permettant un contact direct à la source de chaleur tel qu'un dispositif à flamme et de préférence un dispositif microondes

### [Description des dessins

D'autres particularités et avantages de l'invention apparaitront à la lecture de la description faite à titre d'exemple illustratif et non limitatif, en référence aux Figures annexées, qui représentent :
- la Figure 1, un schéma en vue de coté, d'une unité de mise en oeuvre du procédé de fabrication d'un matériau fibreux pré-imprégné sous forme de rubans calibrés selon l'invention,
- la Figure 2, un schéma en vue de dessus, d'une unité de mise en oeuvre du procédé de fabrication d'un matériau fibreux pré-imprégné sous forme de rubans calibrés selon l'invention,
- la Figure 3, un schéma en coupe de deux rouleaux constitutifs d'une calandre telle qu'utilisée dans l'unité de la Figure 1 ou 2.

### [Description détaillée de l'invention]

### Matrice polymère

On entend par thermoplastique, ou polymère thermoplastique, un matériau généralement solide à température ambiante, pouvant être cristallin, semi-cristallin ou amorphe, et qui se ramollit lors d'une augmentation de température, en particulier après passage de sa température de transition vitreuse (Tg) si amorphe et s'écoule à plus haute température et pouvant observer une fusion franche au passage de sa température dite de fusion (Tf) si cristallin ou semi-cristallin, et qui redevient solide lors d'une diminution de température en dessous de sa température de fusion et en dessous de sa température de transition vitreuse.

Concernant le polymère de constitution de la matrice d'imprégnation du matériau fibreux de la présente invention, ce polymère est avantageusement un polymère thermoplastique ou un mélange de polymères thermoplastiques. Le polymère ou mélange de polymères thermoplastiques est introduit dans une filière d'imprégnation reliée à un système d'extrusion de polymère apte à extruder le polymère thermoplastique ou mélange de polymères thermoplastique à l'état fondu en présence du gaz neutre à l'état supercritique, pouvant être un mélange de gaz neutres à l'état supercritique.

De manière facultative, le polymère thermoplastique ou mélange de polymères thermoplastiques comprend en outre des charges carbonées, en particulier du noir de carbone ou des nanocharges carbonées, de préférence choisies parmi des nanocharges carbonées, en particulier des graphènes et/ou des nanotubes de carbone et/ou des nanofibrilles de carbone ou leurs mélanges. Ces charges permettent de conduire l'électricité et la chaleur, et permettent par conséquent d'améliorer la lubrification de la matrice polymère lorsqu'elle est chauffée.

Selon une autre variante, le polymère thermoplastique ou mélange de polymères thermoplastiques peut en outre comprendre des additifs, tels que des polymères à cristaux liquides ou du poly(butylène téréphtalate) cyclisé, ou des mélanges en contenant, comme la résine CBT100 commercialisée par la société CYCLICS CORPORATION. Ces additifs permettent notamment de fluidifier la matrice polymère à l'état fondu, pour une meilleure pénétration au coeur des fibres. Selon la nature du polymère ou mélange de polymères thermoplastiques utilisé pour réaliser la matrice d'imprégnation, notamment leur température de fusion, on choisira l'un ou l'autre de ces additifs.

De manière avantageuse, le polymère thermoplastique ou mélange de polymères thermoplastique est sélectionné parmi des polymères amorphes dont la température de transition vitreuse est telle que Tg≥ 80°C et/ou parmi des polymères semi-cristallins dont la température de fusion Tf est ≥ 150°C.

Plus particulièrement, les polymères thermoplastiques entrant dans la constitution de la matrice d'imprégnation du matériau fibreux, peuvent être choisis parmi :
- les polymères et copolymères de la famille des polyamides (PA), tels que le polyamide haute densité, le polyamide 6 (PA-6), le polyamide 11 (PA-11), le polyamide 12 (PA-12), le polyamide 6.6 (PA-6.6), le polyamide 4.6 (PA-4.6), le polyamide 6.10 (PA-6.10), le polyamide 6.12 (PA-6.12), les polyamides aromatiques éventuellement modifiées par des unités urée, en particulier les polyphtalamides et l'aramide, et les copolymères blocs, notamment polyamide/polyéther,
- les polyurées, en particulier aromatiques,
- les polymères et copolymères de la famille des acryliques comme les polyacrylates, et plus particulièrement le polyméthacrylate de méthyle (PMMA) ou ses dérivés,
- les polymères et copolymères de la famille des polyaryléther cétones (PAEK) comme le poly(éther éther cétone) (PEEK), ou les polyaryléther cétones cétones (PAEKK) comme le poly(éther cétone cétone) (PEKK) ou leurs dérivés,
- les polyéther-imides (PEI) aromatiques,
- les polyarylsulfures, en particulier le polyphénylène sulfures (PPS),
- les polyarylsulfones , en particulier les polyphénylène sulfones (PPSU),
- les polyoléfines en particulier le polyéthylène (PE);
- l'acide polylactique (PLA),
- l'alcool polyvinylique (PVA),
- les polymères fluorés, en particulier le poly(fluorure de vinylidène) (PVDF), ou le polytétrafluoroéthylène (PTFE) ou le polychlorotrifluoroéthylène (PCTFE),
- et leurs mélanges.

De préférence les polymères de constitution de la matrice sont choisis parmi les polymères thermoplastiques présentant une température de fusion Tf élevée, à savoir à partir de 150°C et plus, comme les Polyamides (PA) en particulier polyamides aromatiques éventuellement modifiées par des unités urées et leur copolymères, le Polyméthacrylate de méthyle (PPMA) et ses copolymères, les Polyether imides (PEI), le Poly(sulfure de phénylène) (PPS), le Poly(sulfone de phénylène) (PPSU), le Polyethercétonecétone (PEKK), le Polyetherethercétone (PEEK), les polymères fluorés comme le poly(fluorure de vinylidène) (PVDF).

Et de manière plus préférée, le polymère thermoplastique ou mélange de polymères thermoplastiques est sélectionné parmi les polyaryl éther cétones, en particulier PEEK, ou polyaryl éther cétone cétone, en particulier PEKK ou polyéther-imides(PEI) aromatiques ou polyaryl sulfones, en particulier polyphénylène sulfones (PPS), ou des polyarylsulfures, en particulier polyphénylène sulfures, ou parmi les polyamides (PA) en particulier polyamides aromatiques éventuellement modifiées par unités urées, ou les polyacrylates en particulier le polyméthacrylate de méthyle (PMMA), ou les polymères fluorés, en particulier le polyfluorure de vinylidène (PVDF).

Pour les polymères fluorés, on préfère utiliser un homopolymère du fluorure de vinylidène (VDF de formule CH2=CF2) ou copolymère du VDF comprenant en poids au moins 50% en masse de VDF et au moins un autre monomère copolymérisable avec le VDF. La teneur en VDF doit être supérieure à 80% en masse, voire mieux 90% en masse, pour assurer une bonne résistance mécanique à la pièce de structure, surtout lorsqu'elle est soumise à des contraintes thermiques. Le comonomère peut être un monomère fluoré choisi par exemple parmi le fluorure de vinyle.

Pour des pièces de structure devant résister à des températures élevées, outre les polymères fluorés, on utilise avantageusement selon l'invention les PAEK (PolyArylEtherKetone) tels que les polyéther cétones PEK, le poly(éther éther cétone) PEEK, le poly(éther cétone cétone) PEKK, le Poly(éther cétone éther cétone cétone) PEKEKK etc.

### Matériau fibreux :

Concernant les fibres de constitution du matériau fibreux, ce sont notamment des fibres d'origine minérale, organique ou végétale comme les fibres de carbone, de verre, de carbure de silicium, de basalte, naturelles en particulier de lin ou de chanvre, de sisal, de soie, ou cellulosiques en particulier de viscose, ou des fibres thermoplastiques de Tg supérieure à la Tg dudit polymère ou dudit mélange de polymères lorsque ce-dernier est amorphe ou de Tf supérieure à la Tf dudit polymère ou dudit mélange de polymères lorsque ce-dernier est semi-cristallin, ou un mélange de deux ou de plusieurs desdites fibres, de préférence de fibres de carbone, de verre ou de carbure de silicium ou leur mélange, en particulier des fibres de carbone.

Parmi les fibres d'origine minérale, on peut choisir les fibres de carbone, les fibres de verre, les fibres de basalte, les fibres de silice, ou les fibres de carbure de silicium par exemple. Parmi les fibres d'origine organique, on peut choisir les fibres à base de polymère thermoplastique ou thermodurcissable, telles que des fibres de polyamides aromatiques, des fibres d'aramide ou des fibres en polyoléfines par exemple. De préférence, elles sont à base de polymère thermoplastique et présentent une température de transition vitreuse Tg supérieure à la Tg du polymère ou mélange de polymère thermoplastique de constitution de la matrice d'imprégnation lorsque ce-dernier est amorphe, ou une température de fusion Tf supérieure à la Tf du polymère ou mélange de polymère thermoplastique de constitution de la matrice d'imprégnation lorsque ce-dernier est semi-cristallin. Ainsi, il n'y a aucun risque de fusion pour les fibres organiques de constitution du matériau fibreux. Parmi les fibres d'origine végétale, on peut choisir les fibres naturelles à base de lin, de chanvre, de soie notamment d'araignée, de sisal, et d'autres fibres cellulosiques, en particulier de viscose. Ces fibres d'origine végétale peuvent être utilisées pures, traitées ou bien enduites d'une couche d'enduction, en vue de faciliter l'adhérence et l'imprégnation de la matrice de polymère thermoplastique

Les fibres constituant le matériau fibreux peuvent être utilisées seules ou en mélanges. Ainsi, des fibres organiques peuvent être mélangées aux fibres minérales pour être imprégnée de polymère thermoplastique et former le matériau fibreux pré-imprégné.

Les fibres sont au choix monobrin, multibrin ou un mélange des deux, et peuvent avoir plusieurs grammages. Elles peuvent en outre présenter plusieurs géométries. Ainsi, elles peuvent se présenter sous forme de fibres courtes, qui composent alors les feutres ou les non tissés pouvant se présenter sous la forme de bandes, nappes, tresses, mèches ou morceaux, ou sous forme de fibres continues, qui composent les tissus 2D, les fibres ou mèches de fibres unidirectionnelles (UD) ou non tissées. Les fibres de constitution du matériau fibreux peuvent en outre se présenter sous forme d'un mélange de ces fibres de renfort de différentes géométries. De préférence, les fibres sont continues.

De préférence le matériau fibreux est constitué par des fibres continues de carbone, de verre ou de carbure de silicium ou leur mélange, en particulier des fibres de carbone. Il est utilisé sous forme de mèche(s).

Selon le ratio volumique de polymère par rapport au matériau fibreux, il est possible de réaliser des matériaux pré-imprégnés dits « prêts à l'emploi » ou des matériaux pré-imprégnés dits « secs ».

Dans les matériaux pré-imprégnés dits « prêts à l'emploi », le polymère ou mélange de polymères thermoplastiques d'imprégnation est réparti uniformément et de manière homogène autour des fibres. Dans ce type de matériau, le polymère thermoplastique d'imprégnation doit être réparti de manière la plus homogène possible au sein des fibres afin d'obtenir un minimum de porosités, c'est à dire de vides entre les fibres. En effet, la présence de porosités dans ce type de matériaux peut agir comme des points de concentrations de contraintes, lors d'une mise sous contrainte mécanique de traction par exemple, et qui forment alors des points d'initiation de rupture du matériau fibreux pré-imprégné et le fragilisent mécaniquement. Une répartition homogène du polymère ou mélange de polymères améliore donc la tenue mécanique et l'homogénéité du matériau composite formé à partir de ces matériaux fibreux pré-imprégnés.

Ainsi, dans le cas de matériaux pré-imprégnés dits « prêts à l'emploi », le taux en volume du polymère ou mélange de polymères thermoplastiques par rapport au matériau fibreux varie de 40 à 250%, de préférence de 45 à 125 %, et plus préférentiellement de 45 à 80%.

Les matériaux fibreux pré-imprégnés dits « secs », quant à eux, comprennent des porosités entre les fibres et une plus faible quantité de polymère thermoplastique d'imprégnation qui recouvre les fibres en surface pour les maintenir ensemble. Ces matériaux pré-imprégnés « secs » sont adaptés à la fabrication de préformes pour matériaux composites. Ces préformes peuvent ensuite être utilisées pour faire de l'infusion de résine thermoplastique ou de résine thermodurcissable par exemple. Les porosités permettent dans ce cas de faciliter le transport ultérieur de la résine polymère infusée, au sein du matériau fibreux pré-imprégné, afin d'améliorer les propriétés finales du matériau composite et notamment sa cohésion mécanique. Dans ce cas, la présence du polymère thermoplastique d'imprégnation sur le matériau fibreux pré-imprégné dit « sec » permet de rendre compatible la résine d'infusion.

Ainsi, dans le cas de matériaux pré-imprégnés dits « secs », le taux en volume du polymère ou du mélange de polymères par rapport au matériau fibreux varie avantageusement de 0,2 et 15 %, de préférence entre 0,2 et 10% et plus préférentiellement de 0,2 et 5%. Dans ce cas on parle de voile polymère, de faible grammage, déposé sur le matériau fibreux pour maintenir les fibres ensembles.

### Etape d'imprégnation :

Le procédé de préparation d'un matériau fibreux pré-imprégné, en particulier sous forme de ruban, selon l'invention, est réalisé par un dispositif d'imprégnation en continu d'une mèche ou d'une pluralité de mèches parallèles de matériau fibreux comprenant avantageusement une filière d'imprégnation alimentée en polymère à l'état fondu contenant le gaz neutre à l'état supercritique.

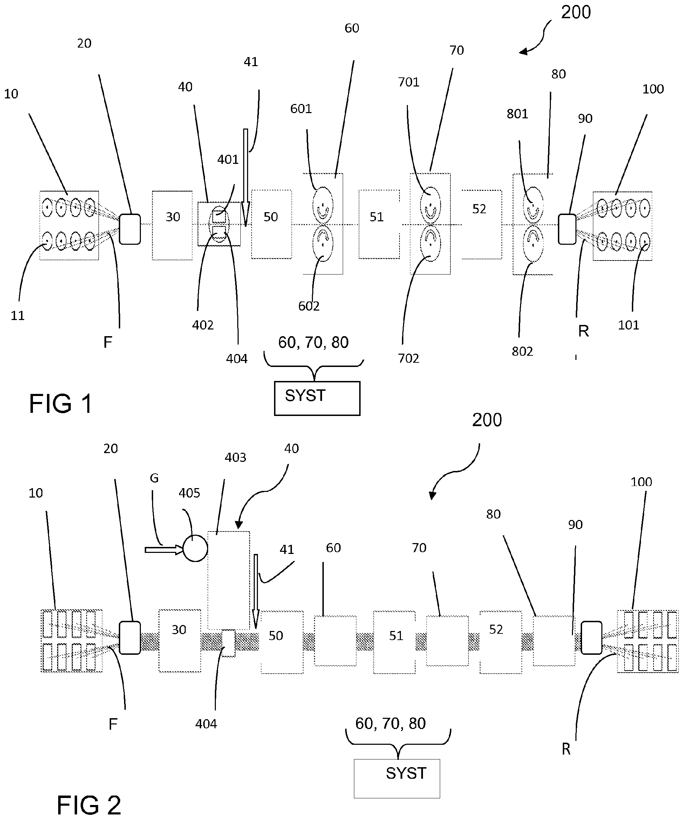

Le procédé et l'unité de mise en oeuvre de ce procédé sont décrits ci-après, en regard des Figures 1 et 2 qui schématisent, de manière très simplifiée, les éléments constitutifs de cette unité 200.

De manière avantageuse, l'étape d'imprégnation du matériau fibreux est réalisée par une technique d'extrusion. Plus particulièrement, on réalise une extrusion en tête d'équerre par rapport à la mèche unique ou par rapport aux mèches multiples parallèles.

De manière avantageuse, l'imprégnation est réalisée par passage d'une ou plusieurs mèches F dans un dispositif 40 d'imprégnation en continu, ce dispositif d'imprégnation 40 comprend une tête d'imprégnation 404, désignée également par filière d'imprégnation.

Chaque mèche à imprégner est pour cela déroulée au moyen d'un dispositif 10 à dévidoirs 11 sous la traction engendrée par des cylindres (dont les axes sont représentés). De préférence, le dispositif 10 comprend une pluralité de dévidoirs 11, chaque dévidoir permettant de dérouler une mèche à imprégner. Ainsi, il est possible d'imprégner plusieurs mèches de fibres simultanément. Chaque dévidoir 11 est pourvu d'un frein (non représenté) de manière à appliquer une tension sur chaque mèche de fibres. Dans ce cas, un module d'alignement 20 permet de disposer les mèches de fibres parallèlement les unes par rapport aux autres. De cette manière les mèches de fibres ne peuvent pas être en contact les unes avec les autres, ce qui permet d'éviter une dégradation mécanique des fibres notamment.

De manière facultative, l'imprégnation peut être complétée par une étape de recouvrement de ladite mèche unique ou desdites mèches multiples parallèles après imprégnation par le polymère fondu, par un polymère fondu pouvant être identique ou différent dudit polymère d'imprégnation, avant l'étape de calandrage. De préférence le polymère fondu est identique au polymère d'imprégnation et de préférence le recouvrement s'effectue par extrusion en tête d'équerre par rapport à la mèche unique ou par rapport auxdites mèches multiples parallèles. L'utilisation d'un polymère différent peut permettre, par exemple, de rajouter des propriétés au matériau composite obtenu ou d'améliorer ses propriétés, par rapport à celles procurées avec le polymère d'imprégnation. La tête d'équerre est alors approvisionnée en polymère thermoplastique fondu par une extrudeuse, cet ensemble est symbolisé par la flèche 41 sur les figures 1 et 2. En effet, un tel recouvrement permet non seulement de compléter l'étape d'imprégnation des fibres pour obtenir un taux volumique final de polymère dans la gamme souhaitée, notamment pour l'obtention de matériaux fibreux dits « prêts à l'emploi » de bonne qualité, mais il permet en outre d'améliorer les performances du matériau composite obtenu.

Avant le passage dans la tête d'imprégnation 404, la mèche de fibres ou les mèches de fibres parallèles passent dans un dispositif de chauffage 30 dont la température est contrôlée et variable, allant de la température ambiante jusqu'à 1000°C. Cependant, cette température sera réduite pour les polymères organiques qui se dégraderaient complètement vers 500°C et devra ester dans les limites de la température à ne pas dépasser pour l'imprégnation. Cette température de chauffage ne dépassera pas dans ce cas 250°C. Ce chauffage permet de porter les mèches de fibres à une température qui facilite leur imprégnation sans toutefois minimiser l'effet technique produit par le gaz supercritique mélangé au polymère fondu à savoir une viscosité réduite. En effet, ce chauffage préalable à l'imprégnation permet d'éviter ainsi une recristallisation trop rapide du polymère par contact avec les mèches. Le dispositif de chauffage 30 peut permettre aussi d'initier la polymérisation d'un matériau préalablement déposé sur les mèches de fibres ou de modifier voire dégrader, voire dégrader totalement par voie thermique l'ensimage des fibres. L'ensimage correspond à la faible quantité de polymère qui recouvre généralement les mèches de fibres pour assurer le liant entre ces fibres au sein de la mèche mais aussi une compatibilité avec la matrice polymère lors d'un procédé d'infusion de résine par exemple. Ce dispositif de chauffage 30 peut, par exemple, être choisi parmi les dispositifs suivants : un dispositif microondes ou d'induction, un dispositif infrarouge IR ou laser ou un autre dispositif permettant un contact direct à la source de chaleur tel qu'un dispositif à flamme. Un dispositif microondes ou par induction est très avantageux, en particulier lorsqu'il est couplé à la présence de nanocharges carbonées dans le polymère ou mélange de polymères puisque les nanocharges carbonées amplifient l'effet de chauffage et le transmettent jusqu'au coeur du matériau.

En sortie de ce dispositif de chauffage 30, les différentes mèches de fibres passent dans la tête d'imprégnation 404. Cette tête d'imprégnation est composée d'une partie supérieure 401 et d'une partie inférieure 402 permettant de régler l'ouverture de la filière au niveau de l'entrée des mèches de fibres et au niveau de la sortie. La tête d'imprégnation 404 est reliée à un dispositif 403 d'extrusion de polymère de type vis sans fin, capable d'extruder le polymère ou mélange de polymères en voie fondue, le polymère étant par conséquent à haute température et en présence d'un gaz ou mélange de gaz supercritique G.

Avantageusement, le dispositif d'extrusion du polymère est composé d'une extrudeuse monovis 403 comportant des zones de dégazage (non représentées). Cette extrudeuse est préférentiellement reliée à un mélangeur statique 405 lui-même relié à une pompe à engrenages (non représentée) assurant un débit de polymère constant dans la filière.

Afin d'éviter une remontée de gaz supercritique dans la trémie d'alimentation (non représentée), on injecte le gaz supercritique G, de préférence à une distance éloignée de la trémie d'alimentation et on adapte les paramètres d'extrusion de sorte qu'une quantité suffisante de polymère visqueux soit présente entre l'entrée du gaz et la trémie d'alimentation et empêche une remontée du gaz vers ladite trémie, de préférence ledit gaz étant injecté dans une zone contrôlée dudit mélangeur statique sous dépression régulée.

En sortie du dispositif d'imprégnation la ou les mèches pré-imprégnées ressortent pour être entrainées vers un dispositif de calandrage.

### Gaz neutre supercritique

On entend par gaz neutre supercritique une substance portée à une température et une pression supérieures à sa température et à sa pression critique, domaine où on ne peut pas faire de distinction entre les phases gazeuses et liquides. Les propriétés d'un gaz neutre supercritique sont intermédiaires entre celles d'un gaz et d'un liquide. On parle d'ailleurs indifféremment, de gaz ou de fluide supercritique.

Dans la présente invention, le gaz neutre à l'état supercritique est un gaz neutre supercritique ou un mélange de gaz neutres supercritiques.

Avantageusement, parmi le gaz supercritiques on choisira les gaz comme par exemple le dioxyde de carbone, l'éthane, le propane, le pentane, l'eau, le méthanol, l'éthanol, l'azote ou des mélanges à base de ces gaz supercritiques.

Plus particulièrement, on préférera utiliser le dioxyde de carbone supercritique (désigné CO2sc ci-après), ou des mélanges de gaz supercritiques contenant du CO2sc pour fluidiser les polymères thermoplastiques pour faciliter leur imprégnation ou dans le cas de la fabrication de mèches sèches pour faire du moussage.

Avantageusement, le gaz neutre à l'état supercritique est le gaz CO2 supercritique ou un mélange de gaz neutres à l'état supercritique contenant le CO2 et un gaz fluoré. Selon une autre option le mélange est à base de CO2 et d'azote.

Le gaz supercritique G, de préférence le CO2 supercritique est injecté au niveau de la tête d'extrusion 403. De manière préférée, le gaz supercritique, de préférence le CO2 supercritique est mélangé audit polymère fondu d'imprégnation dans l'étape i) du procédé, dans un mélangeur statique 405, en particulier sous dépression régulée dans ledit mélangeur.

### Etape de mise en forme

Dès sa (leur) sortie du dispositif d'imprégnation 40 et de façon facultative, du dispositif de recouvrement 41, la mèche (les mèches parallèles) pré-immprégnées d'un polymère fondu, sont mises en forme sous forme de ruban unique unidirectionnel ou d'une pluralité de rubans unidirectionnels parallèles B, au moyen d'un dispositif de calandrage en continu comprenant une ou plusieurs calandres chauffantes.

Avec les techniques antérieures, le calandrage à chaud ne pouvait pas être envisagé pour une étape de mise en forme mais seulement pour une étape de finition car il ne permettait pas de chauffer à des températures suffisantes, en particulier lorsque le polymère, ou mélange de polymères thermoplastiques, d'imprégnation comprend des polymères à haute température de fusion.

De manière avantageuse ce calandrage à chaud permet non seulement de chauffer le polymère d'imprégnation pour qu'il pénètre, adhère et recouvre de manière uniforme les fibres, mais aussi de contrôler l'épaisseur et la largeur du ou des rubans de matériau fibreux pré-imprégné et en particulier sa porosité.

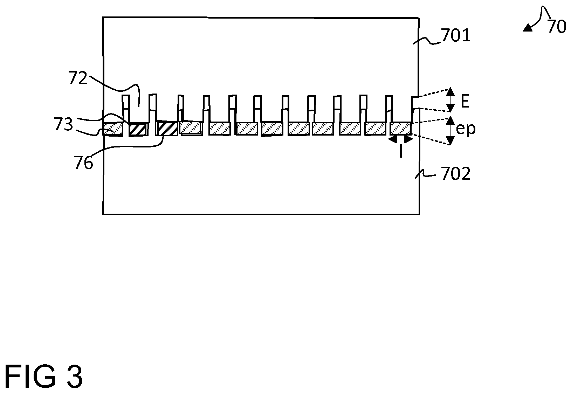

Pour pouvoir réaliser une pluralité de rubans parallèles unidirectionnels, c'est-à-dire autant de rubans que de mèches parallèles pré-imprégnées, par le dispositif d'imprégnation 40, recouvert éventuellement par le dispositif de recouvrement 41, les calandres chauffantes, référencées 60, 70, 80 sur le schéma de la Figure 1, comprennent avantageusement une pluralité de gorges de calandrage, en conformité avec le nombre de rubans. Ce nombre de gorges peut par exemple aller jusqu'à 200. Un système asservi SYST permet en outre de réguler la pression et/ou l'écartement E entre les rouleaux (601, 602); (701, 702) et (801, 802) des calandres. On a illustré sur la figure 3, à titre d'exemple le détail de la calandre 70. On peut voir sur cette figure 3 les rouleaux 701, 702 de la calandre 70, la régulation de la pression et/ou l'écartement E étant effectués de manière à contrôler l'épaisseur ep des rubans par un système d'asservissement SYST piloté par un programme d'ordinateur prévu à cet effet.

Le dispositif de calandrage comprend au moins une calandre chauffante 60 De préférence, il comprend plusieurs calandres chauffantes 60, 70, 80, montées en série. Le fait d'avoir plusieurs calandres en série permet de tasser les porosités dans le matériau et de diminuer leur taux. Cette pluralité de calandres est donc importante lorsque l'on souhaite réaliser des matériaux fibreux dits «prêts à l'emploi ». En revanche, pour fabriquer des matériaux fibreux dits « secs » on peut se contenter d'un nombre de calandres inférieur, voire d'une seule calandre.

De manière avantageuse chaque calandre du dispositif de calandrage dispose d'un système de chauffage intégré par induction ou par microondes et de préférence par microondes, afin de chauffer le polymère ou mélange de polymères thermoplastiques. De manière avantageuse, lorsque le polymère ou mélange de polymères comprend des charges carbonées, telles que du noir de carbone ou des nanocharges carbonées, de préférence choisies parmi des nanocharges carbonées, en particulier des graphènes et/ou des nanotubes de carbone et/ou des nanofibrilles de carbone ou leurs mélanges, l'effet de chauffage par induction est amplifié par la présence de ces charges qui conduisent alors la chaleur jusqu'au coeur du matériau.

De manière avantageuse, les calandres chauffantes du dispositif de calandrage sont couplées à un dispositif de chauffage rapide 50, 51, 52 qui permettent de chauffer le matériau non seulement en surface mais également à coeur. La contrainte mécanique des calandres couplée à ces dispositifs de chauffage rapide, permet d'abord de contrôler les porosités et plus particulièrement de réduire au minimum jusqu'à éliminer la présence de porosités et de répartir de manière homogène le polymère, notamment lorsque le matériau fibreux pré-imprégné est un matériau dit « prêt à l'emploi ». Ces dispositifs de chauffage rapide sont situés avant et/ou après chaque calandre, afin de transmettre rapidement de l'énergie thermique au matériau. Le dispositif de chauffage rapide peut par exemple être choisi parmi les dispositifs suivants : un dispositif microondes ou d'induction, un dispositif infrarouge IR ou laser ou un autre dispositif permettant un contact direct à la source de chaleur tel qu'un dispositif à flamme. Un dispositif microondes ou par induction est très avantageux, en particulier lorsqu'il est couplé à la présence de nanocharges carbonées dans le polymère ou mélange de polymères puisque les nanocharges carbonées amplifient l'effet de chauffage et le transmettent jusqu'au coeur du matériau.

Selon une variante de réalisation, il est en outre possible de combiner plusieurs de ces dispositifs de chauffage.

Dans l'exemple de réalisation, chaque calandre 60, 70, 80 du dispositif de calandrage est couplée à un dispositif de chauffage rapide 50, 51, 52.

De manière facultative, une étape ultérieure consiste à bobiner le ou les rubans pré-imprégnés et mis en forme. Pour cela, l'unité 200 de mise en oeuvre du procédé comprend un dispositif d'embobinage 100 comportant autant de bobines 101 que de rubans, une bobine 101 étant affectée à chaque ruban. Un répartiteur 90 est en général prévu pour dévier les rubans pré-imprégnés vers leurs bobines 101 respectives, tout en évitant que les rubans se touchent afin d'éviter toute dégradation.

La Figure 3 schématise le détail des gorges 73 d'une calandre, dans l'exemple, la calandre 70 vue en coupe. La calandre 70 comprend un rouleau supérieur 701 et un rouleau inférieur 702. Un des rouleaux, par exemple le rouleau supérieur 701, comprend une partie crénelée 72, tandis que l'autre rouleau, c'est-à-dire le rouleau inférieur 702 dans l'exemple, comprend une partie rainurée 76, la forme des rainures étant complémentaire de la forme des parties en saillie 72 du rouleau supérieur. L'écartement E entre les rouleaux 701, 75 et/ou la pression exercée par les deux rouleaux l'un contre l'autre, permet de définir les dimensions des gorges 73, et notamment leur épaisseur ep et la largeur l. Chaque gorge 73 est prévue pour y loger une mèche de fibres qui est alors pressée et chauffée entre les rouleaux. Les mèches se transforment alors en rubans unidirectionnels parallèles dont les dimensions, l'épaisseur et la largeur sont calibrées de façon précise par les gorges 73 des calandres. Chaque calandre comprend avantageusement une pluralité de gorges dont le nombre peut aller jusqu'à 200, de manière à réaliser autant de rubans qu'il y a de gorges et de mèches pré-imprégnées. Le dispositif de calandrage comprend en outre le système d'asservissement SYST permettant de réguler simultanément la pression et/ou l'écartement des rouleaux de calandrage de toutes les calandres de l'unité 200.

Le ou les ruban(s) unidirectionnel(s) ainsi fabriqué(s) présente(nt) une largeur et une épaisseur adaptées à une dépose par robot dans la fabrication de pièces en trois dimensions, sans besoin de refendage. La largeur du ou des ruban(s) est avantageusement comprise entre 5 et 100mm, de préférence entre 5 et 50mm, et de manière encore plus préférée entre 5 et 10mm.
Le procédé de préparation d'un matériau fibreux pré-imprégné qui vient d'être décrit permet de réaliser des matériaux fibreux pré-imprégnés avec une grande productivité tout en permettant une imprégnation homogène des fibres et le contrôle et la reproductibilité de la porosité, et ainsi le contrôle et la reproductibilité des performances de l'article composite final visé. L'imprégnation homogène autour des fibres et l'absence de porosités sont assurées par l'étape d'imprégnation au moyen du polymère à l'état fondu contenant un gaz neutre ou mélange de gaz neutre à l'état supercritique qui aide à la mise en oeuvre par réduction de la viscosité à l'état fondu dudit polymère et l'utilisation d'un dispositif de mise en forme sous contrainte mécanique (calandrage chauffant), lui-même couplé à des dispositifs de chauffage rapide qui permettent de chauffer la matière en surface mais aussi à coeur. Les matériaux obtenus sont des produits semi-finis sous forme de rubans calibrés en épaisseur et en largeur et qui sont utilisés pour la fabrication de pièces de structure en trois dimensions dans les secteurs des transports comme l'automobile, aéronautique civile ou militaire, nautique, ou ferroviaire, des énergies renouvelables, des sports et loisirs, de la santé et du médical, des armes et missiles, de la sécurité et de l'électronique, par un procédé pouvant être de la dépose assistée par une tête de robot par exemple, et connu sous le nom de procédé AFP (de l'acronyme anglais « Automatic Fiber Placement »).

Ce procédé permet donc de fabriquer en continu des rubans de dimensions calibrées et de grande longueur, si bien qu'il permet d'éviter des étapes de refendage et de raboutage coûteuses et préjudiciables à la qualité des pièces composites fabriquées ultérieurement. L'économie liée à la suppression de l'étape de refendage représente environ 30-40% du coût total de la production d'un ruban de matériau fibreux pré-imprégné.

L'association des dispositifs de chauffages rapide aux calandres chauffantes facilite la mise en forme des rubans aux dimensions souhaitées et permet d'augmenter de manière significative la cadence de production de ces rubans par rapport à des procédés conventionnels de mise en forme. De plus, cette association permet de densifier le matériau en supprimant totalement les porosités dans les matériaux fibreux dits « prêts à l'emploi ».

Les dispositifs de chauffage rapide permettent en outre l'utilisation de nombreux grades de polymères, même les plus visqueux, ce qui permet de couvrir toutes les gammes de résistance mécanique souhaitées.

Pour la fabrication spécifique de rubans de matériaux fibreux dits « secs », l'étape d'imprégnation par un polymère à l'état fondu contenant un gaz neutre supercritique permet d'obtenir un grammage de polymères réparti de manière homogène, avec un taux préférentiel de polymère déposé de l'ordre de 5 à 7 g/m et d'obtenir une bonne pénétration des résines utilisées pour faire par exemple de l'infusion sur des préformes.

## Revendications

1. Procédé de préparation d'un matériau fibreux pré-imprégné, en particulier sous forme de ruban, comprenant un renfort fibreux et une matrice de polymère thermoplastique **caractérisé en ce qu'**il comprend l'étape suivante :
i) imprégnation dudit matériau fibreux sous forme d'une mèche unique ou de plusieurs mèches parallèles par ledit polymère à l'état fondu ledit polymère à l'état fondu contenant lors de ladite imprégnation un gaz neutre à l'état supercritique, utilisé comme agent d'aide à la mise en oeuvre par réduction de viscosité à l'état fondu, de préférence ledit gaz étant le CO2 supercritique.

2. Procédé selon la revendication 1, **caractérisé en ce que** ledit polymère est un polymère thermoplastique ou un mélange de polymères thermoplastiques.

3. Procédé selon la revendication 2, **caractérisé en ce que** ledit polymère thermoplastique ou mélange de polymères thermoplastiques comprend en outre des charges carbonées, en particulier du noir de carbone ou des nanocharges carbonées, choisies de préférence parmi des graphènes et/ou des nanotubes de carbone et/ou des nanofibrilles de carbone ou leurs mélanges.

4. Procédé selon les revendications 2 ou 3, **caractérisé en ce que** le polymère thermoplastique ou mélange de polymères thermoplastiques comprend en outre des polymères à cristaux liquides ou du poly(butylène téréphtalate) cyclisé, ou des mélanges en contenant, comme additif.

5. Procédé selon quelconque des revendications 2 à 4, **caractérisé en ce que** ledit polymère, ou mélange de polymères thermoplastiques, est sélectionné parmi des polymères amorphes dont la température de transition vitreuse est telle que Tg≥ 80°C et/ou parmi des polymères semi-cristallins dont la température de fusion Tf est ≥ 150°C.

6. Procédé selon la revendication 5, **caractérisé en ce que** le polymère thermoplastique ou mélange de polymères thermoplastiques est sélectionné parmi les polyaryl éther cétones, en particulier PEEK, ou polyaryl éther cétone cétone, en particulier PEKK ou polyéther-imides(PEI) aromatiques ou polyaryl sulfones, en particulier polyphénylène sulfones (PPS), ou des polyarylsulfures, en particulier polyphénylène sulfures, ou parmi les polyamides (PA) en particulier polyamides aromatiques éventuellement modifiés par des unités urées, ou les polyacrylates en particulier le polyméthacrylate de méthyle (PMMA), ou les polymères fluorés, en particulier le polyfluorure de vinylidène (PVDF).

7. Procédé selon l'une des revendications 1 à 6, **caractérisé en ce qu'**il comprend en plus de l'étape i) les étapes supplémentaires suivantes :
ii) mise en forme de ladite mèche ou desdites mèches parallèles dudit matériau fibreux imprégné selon l'étape i), par calandrage par au moins une calandre chauffante, sous forme de ruban unique unidirectionnel ou des rubans multiples parallèles unidirectionnels, avec dans ce dernier cas ladite calandre chauffante comportant des gorges multiples de calandrage, de préférence jusqu'à 200 gorges de calandrage, en conformité avec le nombre desdits rubans et avec une pression et/ou un écartement entre les rouleaux de la dite calandre régulé par un système asservi.

8. Procédé selon la revendication 7, **caractérisé en ce qu'**il comprend en outre une étape iii) de bobinage dudit ruban ou desdits rubans sur une ou plusieurs bobines, le nombre de bobines étant identique au nombre de rubans, une bobine étant affectée à chaque ruban.

9. Procédé selon l'une quelconque des revendications 1 à 8, **caractérisé en ce que** ladite étape d'imprégnation i) est complétée par une étape de recouvrement de ladite mèche unique ou desdites mèches multiples parallèles après imprégnation par le polymère fondu selon l'étape i), par un polymère fondu pouvant être identique ou différent dudit polymère d'imprégnation i), avant ladite étape calandrage ii), de préférence ledit polymère fondu étant identique audit polymère d'imprégnation i), de préférence ledit recouvrement s'effectuant par extrusion en tête d'équerre par rapport à ladite mèche unique ou par rapport auxdites mèches multiples parallèles.

10. Procédé selon l'une des revendications 1 à 9, **caractérisé en ce que** ledit matériau fibreux comprend des fibres continues sélectionnées parmi les fibres de carbone, de verre, de carbure de silicium, de basalte, naturelles en particulier de lin ou de chanvre, de sisal, de soie, ou cellulosiques en particulier de viscose, ou des fibres thermoplastiques de Tg supérieure à la Tg dudit polymère ou dudit mélange de polymères lorsque ce-dernier est amorphe ou de Tf supérieure à la Tf dudit polymère ou dudit mélange de polymères lorsque ce-dernier est semi-cristallin, ou un mélange de deux ou de plusieurs desdites fibres, de préférence de fibres de carbone, de verre ou de carbure de silicium ou leur mélange, en particulier des fibres de carbone.

11. Procédé selon l'une des revendications 2 à 9, **caractérisé en ce que** le taux en volume dudit polymère ou mélange de polymères par rapport audit matériau fibreux varie de 40 à 250% de préférence de 45 à 125 % et plus préférentiellement de 45 à 80%.

12. Procédé selon l'une des revendications 2 à 9, **caractérisé en ce que** le taux en volume dudit polymère ou dudit mélange de polymères par rapport audit matériau fibreux varie de 0,2 et 15 %, de préférence entre 0,2 et 10% et plus préférentiellement de 0,2 et 5%.

13. Procédé selon la revendication 7, **caractérisé en ce que** l'étape de calandrage ii) est réalisée au moyen d'une pluralité de calandres chauffantes.

14. Procédé selon la revendication 7 ou 13, **caractérisé en ce que** ladite (ou lesdites) calandre(s) chauffante(s) de l'étape ii) comprend un système de chauffage intégré par induction ou par microondes et de préférence par microondes, couplé à la présence de charges carbonées dans ledit polymère thermoplastique ou mélange de polymères thermoplastiques.

15. Procédé selon la revendication 13 ou 14, **caractérisé en ce que** chaque calandre chauffante est associée à un dispositif de chauffage rapide.

16. Procédé selon l'une quelconque des revendications précédentes, **caractérisé en ce que** ladite étape d'imprégnation est réalisée en utilisant une technique d'extrusion.

17. Procédé selon la revendication 16, **caractérisé en ce que** ladite technique d'imprégnation est l'extrusion en tête d'équerre par rapport à ladite mèche unique ou par rapport auxdites mèches multiples parallèles.

18. Procédé selon l'une des revendications 1 à 17, **caractérisé en ce que** ledit un gaz neutre à l'état supercritique est un gaz neutre supercritique ou un mélange de gaz neutre supercritique.

19. Procédé selon la revendication 17, **caractérisé en ce que** ledit gaz neutre à l'état supercritique est le gaz CO supercritique ou un mélange de gaz neutres à l'état supercritique contenant le CO2 et un gaz fluoré ou un mélange à base de CO2 et d'azote.

20. Procédé selon l'une des revendications 1 à 19, **caractérisé en ce que** ledit gaz supercritique, de préférence le CO2 supercritique est injecté au niveau de la tête d'extrusion.

21. Procédé selon l'une des revendications 1 à 19, **caractérisé en ce que** ledit gaz supercritique, de préférence le CO2 supercritique est mélangé audit polymère fondu d'imprégnation i) dans un mélangeur statique.

22. Utilisation du procédé tel que défini selon l'une des revendications 1 à 21, pour la fabrication de rubans calibrés convenables à la fabrication de pièces composites en 3D par dépose automatique par robot desdits rubans.

23. Unité de mise en oeuvre du procédé de préparation d'un matériau fibreux pré-imprégné, en particulier sous forme de ruban, tel que défini dans les revendications 1 à 21, ladite unité étant principalement **caractérisée en ce qu'**elle comprend :
a) un dispositif d'imprégnation en continu d'une mèche ou d'une pluralité de mèches parallèles de matériau fibreux comprenant une filière d'imprégnation alimentée en polymère à l'état fondu contenant le gaz neutre à l'état supercritique,
b) un dispositif de calandrage en continu de ladite mèche ou desdites mèches parallèles, avec mise en forme, sous forme d'un ruban unique ou sous forme de plusieurs rubans parallèles unidirectionnels, comprenant :
b1) au moins une calandre chauffante, en particulier plusieurs calandres chauffantes en série, ladite calandre portant une gorge de calandrage ou plusieurs gorges de calandrage, et de préférence dans ce dernier cas ayant jusqu'à 200 gorges de calandrage,
b2) un système asservi de régulation de la pression et/ou de l'écartement entre rouleaux de calandrage.

24. Unité de mise en oeuvre du procédé, selon la revendication 23, **caractérisé en ce qu'**elle comprend un dispositif de chauffage (30) chauffage disposé avant le dispositif d'imprégnation, choisi parmi les dispositifs suivants : un dispositif microondes ou d'induction, un dispositif infrarouge IR ou laser ou un autre dispositif permettant un contact direct à la source de chaleur tel qu'un dispositif à flamme et de préférence un dispositif microondes.

## Patentansprüche

1. Verfahren zur Herstellung eines vorimprägnierten Fasermaterials, insbesondere in Form eines Bandes, umfassend eine faserige Verstärkung und eine thermoplastische Polymermatrix, **dadurch gekennzeichnet, dass** es den folgenden Schritt umfasst:
i) Imprägnieren des faserigen Materials in Form eines einzelnen Strangs oder mehrerer paralleler Stränge durch das Polymer im geschmolzenen Zustand, wobei das geschmolzene Polymer während der Imprägnierung ein neutrales Gas in überkritischem Zustand enthält, das als Hilfsmittel bei der Verarbeitung im geschmolzenen Zustand durch Verringerung der Viskosität verwendet wird, wobei das Gas vorzugsweise überkritisches CO₂ ist.

2. Verfahren nach Anspruch 1, **dadurch gekennzeichnet, dass** das Polymer ein thermoplastisches Polymer oder eine Mischung aus thermoplastischen Polymeren ist.

3. Verfahren nach Anspruch 2, **dadurch gekennzeichnet, dass** das thermoplastische Polymer oder die thermoplastische Polymermischung ferner kohlenstoffhaltige Füllstoffe, insbesondere Ruß oder Kohlenstoff-Nanofüllstoffe umfasst, die vorzugsweise unter Graphenen und/oder Kohlenstoff-Nanoröhrchen und/oder Kohlenstoff-Nanofibrillen oder Mischungen davon ausgewählt sind.

4. Verfahren nach den Ansprüchen 2 oder 3, **dadurch gekennzeichnet, dass** das thermoplastische Polymer oder die thermoplastische Polymermischung ferner Flüssigkristallpolymere oder cyclisiertes Polybutylenterephthalat oder sie enthaltende Mischungen als Zusatzstoff umfasst.

5. Verfahren nach einem der Ansprüche 2 bis 4, **dadurch gekennzeichnet, dass** das Polymer oder die thermoplastische Polymermischung unter amorphen Polymeren ausgewählt ist, deren Glasübergangstemperatur derart ist, dass Tg ≥ 80°C beträgt, und/oder unter halbkristallinen Polymeren, deren Schmelztemperatur Tf ≥ 150°C beträgt.

6. Verfahren nach Anspruch 5, **dadurch gekennzeichnet, dass** das thermoplastische Polymer oder die thermoplastische Polymermischung unter Polyaryletherketonen, insbesondere PEEK, oder Polyaryletherketonketon, insbesondere PEKK, oder aromatischen Polyetherimiden (PEI) oder Polyarylsulfonen, insbesondere Polyphenylensulfonen (PPS), oder unter den Polyarylsulfiden, insbesondere Polyphenylensulfiden, oder unter Polyamiden (PA), insbesondere aromatischen Polyamiden, die eventuell mit Harnstoffeinheiten modifiziert sind, oder Polyacrylaten, insbesondere Polymethylmethacrylat (PMMA), oder fluorierten Polymeren, insbesondere Polyvinylidenfluorid (PVDF), ausgewählt sind.

7. Verfahren nach einem der Ansprüche 1 bis 6, **dadurch gekennzeichnet, dass** es außer dem Schritt i) die folgenden zusätzlichen Schritte umfasst:
ii) Formen des Strangs oder der parallelen Stränge aus dem beim Schritt i) imprägnierten Fasermaterial durch Kalandrieren mit zumindest einem beheizten Kalander in die Form eines einzelnen unidirektionalen Bandes oder mehrerer unidirektionaler paralleler Bänder, wobei in letzterem Fall der beheizte Kalander vielfache Kalandernuten umfasst, vorzugsweise bis zu 200 Kalandernuten je nach Anzahl der Bänder und mit einem Druck und/oder einem Abstand zwischen den Kalanderwalzen, der durch ein Servosystem geregelt ist.

8. Verfahren nach Anspruch 7, **dadurch gekennzeichnet, dass** es ferner einen Schritt iii) mit Aufwickeln des oder der Bänder auf eine oder mehrere Rollen umfasst, wobei die Anzahl der Rollen gleich der Anzahl der Bänder ist und jedem Band eine Rolle zugeordnet ist.

9. Verfahren nach einem der Ansprüche 1 bis 8, **dadurch gekennzeichnet, dass** der Schritt der Imprägnierung i) mit einem Schritt mit Abdecken des einzelnen Strangs oder der vielfachen parallelen Stränge nach dem Imprägnieren mit dem beim Schritt i) geschmolzenen Polymer vor dem Kalanderschritt ii) mit einem geschmolzenen Polymer ergänzt wird, das identisch oder verschieden vom Polymer der Imprägnierung i) sein kann, wobei vorzugsweise das geschmolzene Polymer identisch mit dem Imprägnierungspolymer i) ist, wobei vorzugsweise die Abdeckung durch Extrusion am Winkelkopf im Verhältnis zum einzelnen Strang oder im Verhältnis zu den vielfachen parallelen Strängen ausgeführt wird.

10. Verfahren nach einem der Ansprüche 1 bis 9, **dadurch gekennzeichnet, dass** das Fasermaterial kontinuierliche Fasern umfasst, die unter Kohlenstoff, Glas, Siliziumkarbid, Basalt, Naturfasern, insbesondere Flachs oder Hanf, Sisal, Seide oder Cellulosefasern, insbesondere Viskose, oder unter thermoplastischen Fasern mit Tg größer als die Tg des Polymers oder der Polymermischung ausgewählt ist, wenn letztere amorph ist, oder mit Tf größer als die Tf des Polymers oder der Polymermischung, wenn letztere halbkristallin ist, oder einer Mischung aus zwei oder mehr der Fasern, vorzugsweise Kohlenstofffasern, Glas- oder Siliziumkarbid oder deren Mischung, insbesondere Kohlenstofffasern.

11. Verfahren nach einem der Ansprüche 2 bis 9, **dadurch gekennzeichnet, dass** der Volumengehalt des Polymers oder der Polymermischung in Bezug auf das Fasermaterial von 40 bis 250%, vorzugsweise von 45 bis 125% und weiter bevorzugt von 45 bis 80% variiert.

12. Verfahren nach einem der Ansprüche 2 bis 9, **dadurch gekennzeichnet, dass** der Volumengehalt des Polymers oder der Polymermischung in Bezug auf das Fasermaterial von 0,2 bis 15%, vorzugsweise zwischen 0,2 und 10% und weiter bevorzugt zwischen 0,2 und 5% variiert.

13. Verfahren nach Anspruch 7, **dadurch gekennzeichnet, dass** der Kalanderschritt ii) mittels einer Mehrzahl von beheizten Kalandern durchgeführt wird.

14. Verfahren nach Anspruch 7 oder 13, **dadurch gekennzeichnet, dass** der/die beheizte(n) Kalander von Schritt ii) ein integriertes Induktions- oder Mikrowellenheizsystem umfassen und vorzugsweise ein Mikrowellensystem, das mit dem Vorhandensein von kohlenstoffhaltigen Füllstoffen im thermoplastischen Polymer oder in der thermoplastischen Polymermischung gekoppelt ist.

15. Verfahren nach Anspruch 13 oder 14, **dadurch gekennzeichnet, dass** jeder beheizte Kalander einer raschen Beheizvorrichtung zugeordnet ist.

16. Verfahren nach einem der vorstehenden Ansprüche, **dadurch gekennzeichnet, dass** der Schritt der Imprägnierung unter Verwendung einer Extrusionstechnik durchgeführt wird.

17. Verfahren nach Anspruch 16, **dadurch gekennzeichnet, dass** die Imprägnierungstechnik die Extrusion am Winkelkopf im Verhältnis zum einzelnen Strang oder im Verhältnis zu den vielfachen parallelen Strängen ist.

18. Verfahren nach einem der Ansprüche 1 bis 17, **dadurch gekennzeichnet, dass** das neutrale Gas im überkritischen Zustand ein überkritisches neutrales Gas oder eine Mischung aus überkritischen neutralen Gasen ist.

19. Verfahren nach Anspruch 17, **dadurch gekennzeichnet, dass** das neutrale Gas im überkritischen Zustand das überkritische CO₂-Gas oder eine Mischung aus neutralen Gasen im überkritischen Zustand ist, die CO₂ enthält, und einem fluorierten Gas oder einer Mischung auf der Grundlage von CO₂ und Stickstoff.

20. Verfahren nach einem der Ansprüche 1 bis 19, **dadurch gekennzeichnet, dass** das überkritische Gas, vorzugsweise überkritisches CO₂, am Extrusionskopf eingespritzt wird.

21. Verfahren nach einem der Ansprüche 1 bis 19, **dadurch gekennzeichnet, dass** das überkritische Gas, vorzugsweise überkritisches CO₂, in einem statischen Mischer mit dem geschmolzenen imprägnierenden Polymer i) vermischt wird.

22. Verwendung des nach einem der Ansprüche 1 bis 21 definierten Verfahrens zur Herstellung von kalibrierten Bändern, die für die Herstellung von 3D-Verbundteilen durch automatisches Aufbringen der Bänder durch einen Roboter geeignet sind.

23. Einheit zur Durchführung des Verfahrens zur Herstellung eines vorimprägnierten Fasermaterials, insbesondere in Form eines Bandes, wie in den Ansprüchen 1 bis 21 definiert ist, wobei die Einheit hauptsächlich **dadurch gekennzeichnet ist, dass** sie Folgendes umfasst:
a) eine Vorrichtung zum kontinuierlichen Imprägnieren eines Strangs oder einer Mehrzahl von parallelen Strängen aus Fasermaterial, umfassend eine Imprägnierdüse, die mit Polymer im geschmolzenen Zustand gespeist wird und das neutrale Gas im überkritischen Zustand enthält,
b) eine Vorrichtung zum kontinuierlichen Kalandrieren des Strangs oder der parallelen Stränge mit Formen in Form eines einzelnen Bandes oder in Form mehrerer paralleler unidirektionaler Bänder, die Folgendes umfasst:
b1) zumindest eine beheizte Kalander, insbesondere mehrere in Reihe geschaltete beheizte Kalander, wobei der Kalander eine Kalandernut oder mehrere Kalandernuten trägt und vorzugsweise im letzteren Fall bis zu 200 Kalandernuten aufweist,
b2) ein Servosystem zum Regeln des Drucks und/oder des Abstands zwischen den Kalanderwalzen.

24. Einheit zur Durchführung des Prozesses nach Anspruch 23, **dadurch gekennzeichnet, dass** sie eine vor der Imprägniervorrichtung angeordnete Heizvorrichtung (30) umfasst, die unter den folgenden Vorrichtungen ausgewählt ist: eine Mikrowellen- oder Induktionsvorrichtung, eine IR- oder Laservorrichtung oder eine andere Vorrichtung, die einen direkten Kontakt mit der Wärmequelle ermöglicht, wie beispielsweise eine Vorrichtung mit Flamme und vorzugsweise eine Mikrowellenvorrichtung.

## Claims

1. Method to produce a pre-impregnated fibrous material, in particular in ribbon form, comprising a fibrous reinforcement and thermoplastic polymer matrix, **characterized in that** it comprises the following step:
i) impregnating said fibrous material in the form of a single roving or several parallel rovings with said polymer in the molten state, said polymer in the molten state at the time of said impregnation containing a neutral gas in the supercritical state, used as preparation aid by reducing viscosity in the molten state, preferably said gas being supercritical CO₂.

2. The method according to claim 1, **characterized in that** said polymer is a thermoplastic polymer or mixture of thermoplastic polymers.

3. The method according to claim 2, **characterized in that** said thermoplastic polymer or mixture of thermoplastic polymers further comprises carbon fillers, in particular carbon black or carbon nanofillers, preferably selected from among graphenes and/or carbon nanotubes and/or carbon nanofibrils or mixtures thereof.

4. The method according to claims 2 or 3, **characterized in that** the thermoplastic polymer or mixture of thermoplastic polymers further comprises liquid crystal polymers or cyclic polybutylene terephthalate or mixtures containing the same, as additive.

5. The method according to any of claims 2 to 4, **characterized in that** said polymer, or mixture of thermoplastic polymers, is selected from among amorphous polymers having a glass transition temperature such that Tg ≥ 80°C and/or from among semi-crystalline polymers having a melting temperature Tm ≥ 150°C.

6. The method according to claim 5,**characterized in that** the thermoplastic polymer or mixture of thermoplastic polymers is selected from among polyaryl ether ketones in particular PEEK, or polyaryl ether ketone ketone in particular PEKK, or aromatic polyether-imides (PEI) or polyaryl sulfones, in particular polyphenylene sulfones (PPS) or polyaryl sulfides, in particular polyphenylene sulfides, or from among polyamides (PA) in particular aromatic polyamides optionally modified by urea units, or polyacrylates in particular polymethylmethacrylate (PMMA), or fluorinated polymers in particular polyvinylidene fluoride (PVDF).

7. The method according to one of claims 1 to 6, **characterized in that** it in addition to step i) comprises the following additional steps:
ii) forming said roving or said parallel rovings of said fibrous material impregnated at step i), by calendering with at least one heating calender, into the form of a single unidirectional ribbon or multiple parallel unidirectional ribbons, and in this latter case said heating calender comprising multiple calendering grooves, preferably up to 200 calendering grooves conforming to the number of said ribbons, the pressure and/or spacing between the rollers of said calender being regulated by a servo system.

8. The method according to claim 7, **characterized in that** it further comprises a winding step iii) of said ribbon(s) onto one or more spools, the number of spools being identical to the number of ribbons, one spool being allocated to each ribbon.

9. The method according to any of claims 1 to 8, **characterized in that** said impregnation step i) is completed by a coating step of said single roving or said multiple parallel rovings after impregnation with the molten polymer at step i), with a molten polymer which may be the same as or different from said impregnation polymer i), before said calendering step ii), preferably said molten polymer being the same as said impregnation polymer i), preferably said coating being performed by crosshead extrusion relative to said single roving or relative to said multiple parallel rovings.

10. The method according to one of claims 1 to 9, **characterized in that** said fibrous material comprises continuous fibres selected from among carbon, glass, silicon carbide, basalt fibres, natural fibres in particular flax or hemp, sisal, silk or cellulosic in particular viscose, or thermoplastic fibres having a Tg higher than the Tg of said polymer or said mixture of polymers when the latter are amorphous, or having a Tm higher than the Tm of said polymer or said mixture of polymers when the latter are semi-crystalline, or a mixture of two or more of said fibres, preferably carbon, glass or silicon carbide fibres or mixture thereof, in particular carbon fibres.

11. The method according to one of claims 2 to 9, **characterized in that** the volume percentage of said polymer or mixture of polymers relative to said fibrous material varies from 40 to 250%, preferably from 45 to 125%, and more preferably from 45 to 80%.

12. The method according to one of claims 2 to 9, **characterized in that** the volume percentage of said polymer or mixture of polymers relative to said fibrous material varies from 0.2 to 15%, preferably between 0.2 and 10% and more preferably between 0.2 and 5%.

13. The method according to claim 7, **characterized in that** the calendering step ii) is performed using a plurality of heating calenders.

14. The method according to claim 7 or 13, **characterized in that** said heating calender(s) at step ii) comprise an integrated heating system via induction or microwave and preferably via microwave, combined with the presence of carbon fillers in said thermoplastic polymer or mixture of thermoplastic polymers.

15. The method according to claim 13 or 14, **characterized in that** each heating calender is associated with a rapid heating device.

16. The method according to any of the preceding claims, **characterized in that** said impregnation step is performed using an extrusion technique.

17. The method according to claim 16, **characterized in that** said impregnation technique is crosshead extrusion relative to said single roving or relative to said multiple parallel rovings.

18. The method according to one of claims 1 to 17, **characterized in that** said one neutral gas in the supercritical state is a supercritical neutral gas or mixture of supercritical neutral gases.

19. The method according to claim 17, **characterized in that** said neutral gas in the supercritical state is supercritical CO₂ gas or a mixture of neutral gases in the supercritical state containing CO₂ and a fluorinated gas or mixture of CO₂ and nitrogen.

20. The method according to one of claims 1 to 19, **characterized in that** said supercritical gas, preferably supercritical CO₂, is injected at the extrusion head.

21. The method according to one of claims 1 to 19, **characterized in that** said supercritical gas, preferably supercritical CO₂, is mixed with said molten impregnating polymer i) in a static mixer.

22. Use of the method such as defined in one of claims 1 to 21 to produce calibrated ribbons suitable for the manufacture of 3D composite parts via automated deposition of said ribbons by a robot.

23. Unit to implement the method for preparing a pre-impregnated fibrous material, in particular in ribbon form, such as defined in claims 1 to 21, said unit being chiefly **characterized in that** it comprises:
a) a device for continuous impregnation of a roving or plurality of parallel rovings of fibrous material, comprising a impregnation die fed with polymer in the molten state containing the neutral gas in the supercritical state,
b) a device for continuous calendering of said roving or said parallel rovings, with forming into the form of a single ribbon or into the form of several parallel unidirectional ribbons, comprising:
b1) at least one heating calender, in particular several heating calenders in series, said calender carrying a calendaring groove or several calendaring grooves, and preferably in this latter case having up to 200 calendering grooves;
b2) a servo system for regulating the pressure and/or spacing between the calender rollers.

24. Unit for implementing the method according to claim 23, **characterized in that** it comprises a heating device (30) arranged before the impregnation device, selected from among the following devices: a microwave or induction device, an infrared IR or laser device, or other device allowing direct contact with the heat source such as a flame device and preferably a microwave device.
